# EUROPEAN PATENT APPLICATION

(11) **EP 4 851 440 A2**
(43) Date of publication of application: **09.12.2026**
(21) Application number: 26183435.2
(22) Date of filing: 05.06.2026
(51) Int. Cl.: F02C 7/14, F02C 6/08, F02C 7/18, F02K 3/06

(54) **MULTI-CIRCUIT WORKING FLUID SYSTEM FOR AIRCRAFT PROPULSION SYSTEM**

(30) Priority: 06.06.2025 US 202519230348
(71) Applicant: RTX Corporation, Farmington, CT 06032 (US)
(72) Inventor: YAZICI, Murat, Glastonbury (US); BREAULT, Andrew E., Bolton (US)
(74) Representative: Dehns

(57) **Abstract**

An assembly is provided for an aircraft propulsion system (20). This assembly includes an engine core (44), an engine flowpath and a working fluid system (98). The engine core (44) includes a compressor section (39), a combustor section (40) and a turbine section (41). The working fluid system (98) includes a first fluid circuit (102) and a second fluid circuit (104). The working fluid system (98) is configured to direct a working fluid through the first fluid circuit (102) during a first mode. The first fluid circuit (102) includes a first circuit heat exchanger (114) configured to transfer heat energy between the working fluid and air flowing within the engine flowpath upstream of the combustor section (40). The working fluid system (98) is configured to direct the working fluid through the second fluid circuit (104) during a second mode. The second fluid circuit (104) includes a second circuit heat exchanger (128) configured to transfer heat energy between the working fluid and air flowing outside of the engine flowpath.

## Description

### BACKGROUND OF THE DISCLOSURE

### 1. Technical Field

The invention relates generally to an aircraft and, more particularly, to a working fluid system for a propulsion system of the aircraft.

### 2. Background Information

An aircraft propulsion system may include a working fluid system to cool and/or lubricate various components of the aircraft propulsion system. Various types and configurations of working fluid systems are known in the art. While these known working fluid systems have various benefits, there is still room in the art for improvement.

### SUMMARY OF THE DISCLOSURE

According to an aspect of the present invention, an assembly is provided for an aircraft propulsion system. This assembly includes an engine core, an engine flowpath and a working fluid system. The engine core includes a compressor section, a combustor section and a turbine section. The engine flowpath extends longitudinally through the compressor section, the combustor section and the turbine section from an airflow inlet into the engine flowpath to a combustion products exhaust from the engine flowpath. The working fluid system includes a first fluid circuit and a second fluid circuit. The working fluid system is configured to direct a working fluid through the first fluid circuit during a first mode. The first fluid circuit includes a first circuit heat exchanger configured to transfer heat energy between the working fluid and air flowing within the engine flowpath upstream of the combustor section. The working fluid system is configured to direct the working fluid through the second fluid circuit during a second mode. The second fluid circuit includes a second circuit heat exchanger configured to transfer heat energy between the working fluid and air flowing outside of the engine flowpath.

According to another aspect of the present invention, another assembly is provided for an aircraft propulsion system. This assembly includes a propulsion section, an engine core, a rotating structure, a geartrain, an engine flowpath and a working fluid system. The propulsion section includes a propulsor rotor. The engine core is configured to power operation of the propulsion section. The engine core includes a compressor section, a combustor section and a turbine section. The rotating structure includes a compressor rotor in the compressor section and a turbine rotor in the turbine section. The geartrain includes a plurality of epicyclic gear systems serially coupled between the rotating structure and the propulsor rotor. The engine flowpath extends longitudinally through the compressor section, the combustor section and the turbine section from an airflow inlet into the engine flowpath to a combustion products exhaust from the engine flowpath. The working fluid system is configured to cool and/or lubricate the geartrain using a working fluid. The working fluid system includes a heat exchanger configured to transfer heat energy between the working fluid and air flowing within the engine flowpath.

According to still another aspect of the present invention, another assembly is provided for an aircraft propulsion system. This assembly includes a propulsion section, an engine core, an engine flowpath and a working fluid system. The propulsion section includes an open propulsor rotor. The engine core is configured to power operation of the propulsion section. The engine core includes a compressor section, a combustor section and a turbine section. The engine flowpath extends longitudinally through the compressor section, the combustor section and the turbine section from an airflow inlet into the engine flowpath to a combustion products exhaust from the engine flowpath. The working fluid system is configured to cool and/or lubricate a component of the aircraft propulsion system using a working fluid. The working fluid system includes a heat exchanger configured to transfer heat energy between the working fluid and air flowing within the engine flowpath.

In any of the aspect or embodiments described above or herein, the working fluid system may be configured to stop flow of the working fluid through the first fluid circuit during the second mode.

In any of the aspect or embodiments described above or herein, the working fluid system may be configured to stop flow of the working fluid through the second fluid circuit during the first mode.

In any of the aspect or embodiments described above or herein, the working fluid system may be configured to direct the working fluid through the first fluid circuit and the second fluid circuit during a third mode.

In any of the aspect or embodiments described above or herein, the first mode may be selected during low power operation of the engine core. In addition or alternatively, the second mode may be selected during intermediate power operation and/or high power operation of the engine core.

In any of the aspect or embodiments described above or herein, the first circuit heat exchanger may be disposed along the engine flowpath between the compressor section and the airflow inlet.

In any of the aspect or embodiments described above or herein, the assembly may also include a vane structure including an inner wall, an outer wall and a plurality of vanes. The inner wall may form an inner peripheral boundary of the engine flowpath longitudinally through the vane structure. The outer wall may form an outer peripheral boundary of the engine flowpath longitudinally through the vane structure. The vanes may be arranged circumferentially about an axis in an array. Each of the vanes may extend radially across the engine flowpath from the inner wall to the outer wall. The vanes may include a first vane. The first circuit heat exchanger may be configured with (e.g., within) the first vane. In addition or alternatively, the first circuit heat exchanger may be configured with (e.g., within) the inner wall. In addition or alternatively, the first circuit heat exchanger may be configured with (e.g., within) the outer wall.

In any of the aspect or embodiments described above or herein, the first fluid circuit may also include another (e.g., a second) first circuit heat exchanger configured to transfer heat energy between the working fluid and the air flowing within the engine flowpath upstream of the combustor section. The vanes may include a second vane. Said another first circuit heat exchanger may be configured with the second vane.

In any of the aspect or embodiments described above or herein, the first fluid circuit may also include another or one or more additional (e.g., a second, third and/or fourth) first circuit heat exchanger(s) configured to transfer heat energy between the working fluid and the air flowing within the engine flowpath upstream of the combustor section. Said another first circuit heat exchanger(s) may be configured with the inner wall and/or the outer wall.

In any of the aspect or embodiments described above or herein, the assembly may also include a flowpath wall forming a peripheral boundary of a longitudinal section of the engine flowpath. The first circuit heat exchanger may be configured with the flowpath wall.

In any of the aspect or embodiments described above or herein, the assembly may also include a bypass flowpath disposed outside of the engine core. The air flowing outside of the engine core may be bled from the bypass flowpath.

In any of the aspect or embodiments described above or herein, the working fluid may be or otherwise include lubricant.

In any of the aspect or embodiments described above or herein, the assembly may also include a propulsion system component. The working fluid system may be configured to service the propulsion system component using the working fluid during the first mode and the second mode.

In any of the aspect or embodiments described above or herein, the assembly may also include a propulsor rotor, a rotating structure and a geartrain. The rotating structure may be configured to drive rotation of the propulsor rotor. The rotating structure may include a compressor rotor in the compressor section and a turbine rotor in the turbine section. The geartrain may operatively couple the rotating structure to the propulsor rotor. The propulsion system component may be configured as or otherwise include the geartrain.

In any of the aspect or embodiments described above or herein, the geartrain may include a plurality of epicyclic gear systems serially coupled between the rotating structure and the propulsor rotor.

In any of the aspect or embodiments described above or herein, the assembly may also include a rotating structure and an electric machine system. The rotating structure may include a compressor rotor in the compressor section and a turbine rotor in the turbine section. The electric machine system may be operatively coupled to the rotating structure. The electric machine system may include the propulsion system component.

In any of the aspect or embodiments described above or herein, the assembly may also include a propulsion section comprising a ducted propulsor rotor. The engine core may be configured to power operation of the propulsion section.

In any of the aspect or embodiments described above or herein, the assembly may also include a propulsion section comprising an open propulsor rotor. The engine core may be configured to power operation of the propulsion section.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

Certain exemplary embodiments will now be described in greater detail by way of example only and with reference to the accompanying drawings in which:
FIG. 1 is a partial schematic illustration of an aircraft propulsion system with a ducted propulsor rotor.
FIG. 2 is a partial schematic illustration of the aircraft propulsion system at a working fluid system.
FIG. 3 is an end view schematic illustration of a stator vane structure configured with one or more heat exchangers.
FIGS. 4A-C are partial schematic illustrations of the aircraft propulsion system with various air circuit inlet arrangements.
FIG. 5 is a partial schematic illustration of the aircraft propulsion system at a geartrain with multiple gear systems.
FIG. 6 is a partial schematic illustration of the aircraft propulsion system with an electric machine system and an electrical system.
FIG. 7 is a partial schematic illustration of the aircraft propulsion system with an open propulsor rotor.

### DETAILED DESCRIPTION

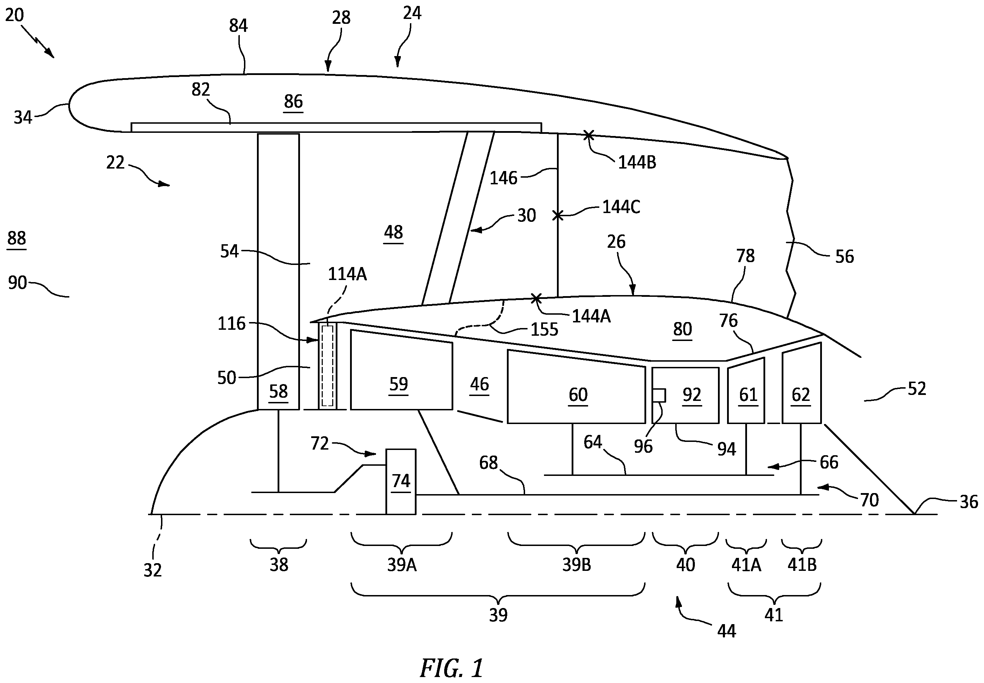

FIG. 1 illustrates a propulsion system 20 for an aircraft. The aircraft may be an airplane, a drone (e.g., an unmanned aerial vehicle (UAV)) or any other manned or unmanned aerial vehicle or system. For ease of description, the aircraft propulsion system 20 is described below as a turbofan propulsion system. The aircraft propulsion system 20 of the present disclosure, however, is not limited to such an exemplary propulsion system. The aircraft propulsion system 20, for example, may alternatively be configured as a turbojet propulsion system, a turboprop propulsion system, a turboshaft propulsion system, a propfan propulsion system, a pusher fan propulsion system, or any other type of ducted and/or open propulsor rotor propulsion system.

The aircraft propulsion system 20 of FIG. 1 includes a gas turbine engine 22 (e.g., a turbofan engine) housed within a stationary propulsion system housing 24. This propulsion system housing 24 includes an inner housing structure 26, an outer housing structure 28 and a guide vane structure 30 (e.g., a fan exit guide vane (FEGV) structure) extending radially between and connected to the inner housing structure 26 and the outer housing structure 28. The aircraft propulsion system 20 extends axially along an axis 32 of the aircraft propulsion system 20 between an axial upstream, forward end 34 of the aircraft propulsion system 20 and an axial downstream, aft end 36 of the aircraft propulsion system 20. Briefly, the propulsion system axis 32 may be a centerline axis of the aircraft propulsion system 20, the turbine engine 22 and/or one or more of its members. The propulsion system axis 32 may also or alternatively be a rotational axis for one or more members of the turbine engine 22.

The aircraft propulsion system 20 and its turbine engine 22 of FIG. 1 include a propulsion section 38 (e.g., a fan section), a compressor section 39, a combustor section 40 and a turbine section 41. The compressor section 39 of FIG. 1 includes a low pressure compressor (LPC) section 39A and a high pressure compressor (HPC) section 39B. The turbine section 41 of FIG. 1 includes a high pressure turbine (HPT) section 41A and a low pressure turbine (LPT) section 41B. At least (or only) the LPC section 39A, the HPC section 39B, the combustor section 40, the HPT section 41A and the LPT section 41B collectively form a core 44 (e.g., a gas generator) of the turbine engine 22. The aircraft propulsion system 20 and its turbine engine 22 of FIG. 1 also include a core flowpath 46 (e.g., an annular core flowpath) and a bypass flowpath 48 (e.g., an annular bypass flowpath). The core flowpath 46 sequentially extends longitudinally through the LPC section 39A, the HPC section 39B, the combustor section 40, the HPT section 41A and the LPT section 41B from an airflow inlet 50 into the core flowpath 46 to a combustion products exhaust 52 out from the core flowpath 46. The bypass flowpath 48 extends longitudinally through a bypass duct from an airflow inlet 54 into the bypass flowpath 48 to an airflow exhaust 56 from the bypass flowpath 48, where the bypass duct may be formed by the inner housing structure 26 and the outer housing structure 28. The bypass flowpath 48 and its bypass duct are configured to bypass (e.g., are disposed radially outboard of and extend along) the engine core 44 and the inner housing structure 26.

The propulsion section 38, the LPC section 39A, the HPC section 39B, the combustor section 40, the HPT section 41A and the LPT section 41B may be arranged sequentially along the propulsion system axis 32 within the propulsion system housing 24. The propulsion section 38 includes a bladed propulsor rotor 58; e.g., a fan rotor. The LPC section 39A includes a bladed low pressure compressor (LPC) rotor 59. The HPC section 39B includes a bladed high pressure compressor (HPC) rotor 60. The HPT section 41A includes a bladed high pressure turbine (HPT) rotor 61. The LPT section 41B includes a bladed low pressure turbine (LPT) rotor 62. Each of these engine rotors 58-62 includes a rotor base (e.g., a disk or a hub) and a plurality of rotor blades (e.g., airfoils, vanes, etc.). The rotor blades may be arranged into one or more stages axially along the respective engine rotor 58-62. The rotor blades in each stage are arranged and may be equispaced circumferentially around the respective rotor base in an annular array. Each of the rotor blades is connected to the respective rotor base. The rotor blades, for example, may be formed integral with or mechanically fastened, welded, brazed and/or otherwise attached to the respective rotor base. Each of the rotor blades projects spanwise (e.g., radially) out from the respective rotor base to a distal tip of the respective rotor blade.

The HPC rotor 60 is coupled to and rotatable with the HPT rotor 61. The HPC rotor 60 of FIG. 1, for example, is connected to the HPT rotor 61 through a high speed shaft 64. At least (or only) the HPC rotor 60, the HPT rotor 61 and the high speed shaft 64 collectively form a high speed rotating structure 66; e.g., a high speed spool of the turbine engine 22 and its engine core 44. This high speed rotating structure 66 of FIG. 1 and its members 60, 61 and 64 are rotatable about the propulsion system axis 32. However, it is contemplated the high speed rotating structure 66 may alternatively be rotatable about another axis radially and/or angularly offset from the rotational axis of the propulsor rotor 58 and/or the centerline axis of the turbine engine 22.

The LPC rotor 59 is coupled to and rotatable with the LPT rotor 62. The LPC rotor 59 of FIG. 1, for example, is connected to the LPT rotor 62 through a low speed shaft 68. At least (or only) the LPC rotor 59, the LPT rotor 62 and the low speed shaft 68 collectively form a low speed rotating structure 70; e.g., a low speed spool of the turbine engine 22 and its engine core 44. This low speed rotating structure 70 of FIG. 1 and its members 59, 62 and 68 are rotatable about the propulsion system axis 32. However, it is contemplated the low speed rotating structure 70 may alternatively be rotatable about another axis radially and/or angularly offset from the rotational axis of the propulsor rotor 58 and/or the centerline axis of the turbine engine 22.

The low speed rotating structure 70 is coupled to the propulsor rotor 58 through a rotating structure-to-propulsor (RSP) drivetrain 72. The RSP drivetrain 72 may be configured as a geared drivetrain, where a geartrain 74 (e.g., a transmission, a speed change device, etc.) is disposed between and operatively couples the propulsor rotor 58 to the low speed rotating structure 70 and its LPT rotor 62. With this arrangement, the propulsor rotor 58 may rotate at a different (e.g., slower) rotational speed than the low speed rotating structure 70 and its LPT rotor 62. Here, the propulsor rotor 58 and the low speed rotating structure 70 may rotate in a common (the same) direction about the propulsion system axis 32 or in opposite directions about the propulsion system axis 32 depending, for example, upon the specific configuration of the geartrain 74. Alternatively, the RSP drivetrain 72 may be configured as a direct-drive drivetrain, where the geartrain 74 is omitted. With such an arrangement, the propulsor rotor 58 rotates at a common (the same) rotational speed as the low speed rotating structure 70 and its LPT rotor 62.

The inner housing structure 26 of FIG. 1 includes an inner case 76 (e.g., a core case) for the turbine engine 22, an inner nacelle structure 78 (sometimes referred to as an inner fixed structure (IFS)) and an internal inner housing compartment 80 (e.g., an engine core compartment). The inner case 76 is disposed radially outboard of, extends axially along and may circumscribe one or more or all of the engine sections 39A-41B and the engine rotors 59-62. The inner case 76 may thereby house and provide a support structure for the respective engine sections 39A-41B and the engine rotors 59-62. The inner nacelle structure 78 is configured to provide an aerodynamic cover over the engine core 44 and its inner case 76. The inner housing compartment 80 of FIG. 1 is formed by and is disposed radially between the inner case 76 and an inner barrel of the inner nacelle structure 78. The inner housing structure 26 and its inner nacelle structure 78 may also form a radial inner peripheral boundary of the bypass flowpath 48.

The outer housing structure 28 of FIG. 1 includes an outer case 82 (e.g., a fan case) for the turbine engine 22, an outer nacelle structure 84 and an internal outer housing compartment 86. The outer case 82 is disposed radially outboard of, extends axially along and may circumscribe the propulsion section 38 and its propulsor rotor 58. The outer case 82 may thereby house and may be configured as a containment structure for the propulsion section 38 and its propulsor rotor 58. The outer nacelle structure 84 is configured to provide an aerodynamic cover over the outer case 82. The outer housing compartment 86 of FIG. 1 is at least partially formed by and disposed radially between the outer case 82 and an outer portion (e.g., fan cowls) of the outer nacelle structure 84. The outer housing structure 28 and its outer nacelle structure 84 may also form a radial outer peripheral boundary of the bypass flowpath 48.

During operation of the aircraft propulsion system 20 of FIG. 1, ambient air from an environment 88 external to the aircraft and its aircraft propulsion system 20 enters the aircraft propulsion system 20 and its turbine engine 22 through an airflow inlet 90. This air is propelled by the rotating propulsor rotor 58 in a downstream, aft direction towards the propulsion system aft end 36.

An outer stream of the air propelled by the rotating propulsor rotor 58 is directed into the bypass flowpath 48 through its bypass inlet 54. This air entering the bypass flowpath 48 may be referred to as "bypass air". The guide vane structure 30 conditions (e.g., straightens out, de-swirls, etc.) the flow of the bypass air within the bypass duct. This conditioned bypass air is subsequently directed out of the aircraft propulsion system 20 through the bypass exhaust 56 to provide forward thrust. This propulsion of the bypass air may account for a majority of the forward thrust generated by the aircraft propulsion system 20 and its turbine engine 22 of FIG. 1.

An inner stream of the air propelled by the rotating propulsor rotor 58 is directed into the core flowpath 46 through its core inlet 50. This air entering the core flowpath 46 may be referred to as "core air". The core air is compressed by the LPC rotor 59 and the HPC rotor 60 and is directed into a combustion chamber 92 (e.g., annular combustion chamber) of a combustor 94 (e.g., annular combustor) in the combustor section 40. Fuel is injected into the combustion chamber 92 by one or more fuel injectors 96 and mixed with the compressed core air to provide a fuel-air mixture. This fuel-air mixture is ignited and combustion products thereof flow through and sequentially drive rotation of the HPT rotor 61 and the LPT rotor 62. The rotation of the HPT rotor 61 and the LPT rotor 62 respectively drive rotation of the HPC rotor 60 and the LPC rotor 59 and, thus, compression of the air received from the core inlet 50. The rotation of the LPT rotor 62 also drives rotation of the propulsor rotor 58 through the RSP drivetrain 72 and its geartrain 74.

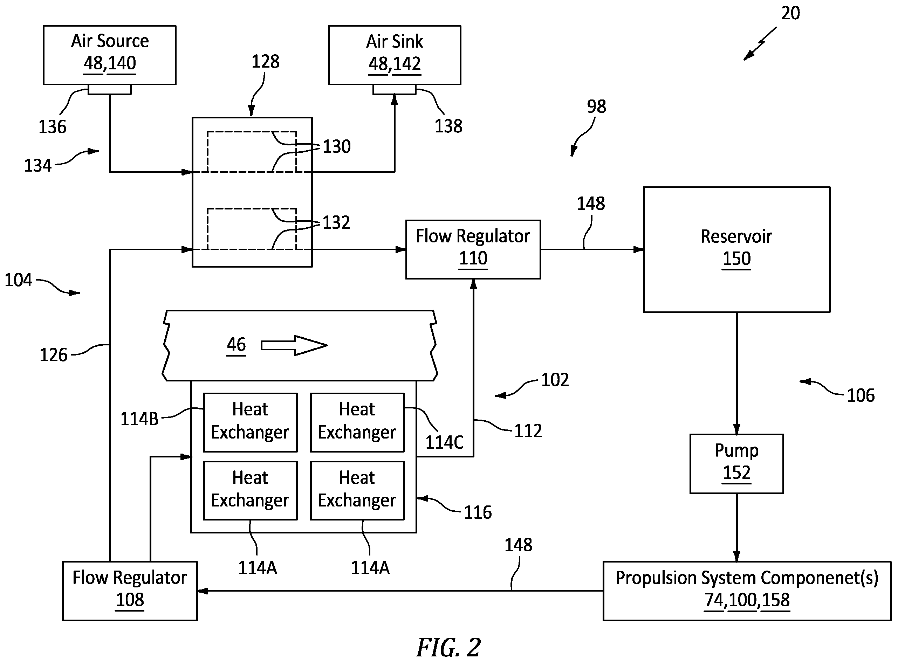

Referring to FIG. 2, the aircraft propulsion system 20 includes a working fluid system 98 configured to regulate a temperature of (e.g., cool), lubricate and/or otherwise service a component 100 (or multiple components) of the aircraft propulsion system 20 utilizing a working fluid. This working fluid may be a liquid working fluid such as lubricant (e.g., oil), coolant, hydraulic fluid, and/or the like. The working fluid system 98 of FIG. 2 includes a plurality of fluid circuits, including a first heat exchange (HX) circuit 102, a second heat exchange (HX) circuit 104 and a component circuit 106. This working fluid system 98 also includes one or more flow regulators 108 and 110 for selectively diverting the working fluid between the fluid circuits 102, 104 and 106.

The first HX circuit 102 includes a first circuit path 112 and one or more first circuit heat exchangers 114A-C (generally referred to as "114"). The first circuit path 112 extends longitudinally through the first circuit heat exchangers 114 (e.g., in parallel and/or in series) from a first outlet of the first flow regulator 108 to a first inlet into the second flow regulator 110. Each of the first circuit heat exchangers 114 is configured to transfer heat energy between the working fluid flowing in the first circuit path 112 and the core air flowing in the core flowpath 46. The first circuit heat exchangers 114 of FIG. 1, for example, are arranged along the core flowpath 46 upstream of the combustor section 40. More particularly, the first circuit heat exchangers 114 of FIG. 1 are arranged with a longitudinal section of the core flowpath 46 upstream of the compressor section 39; e.g., between the LPC section 39A and the core inlet 50.

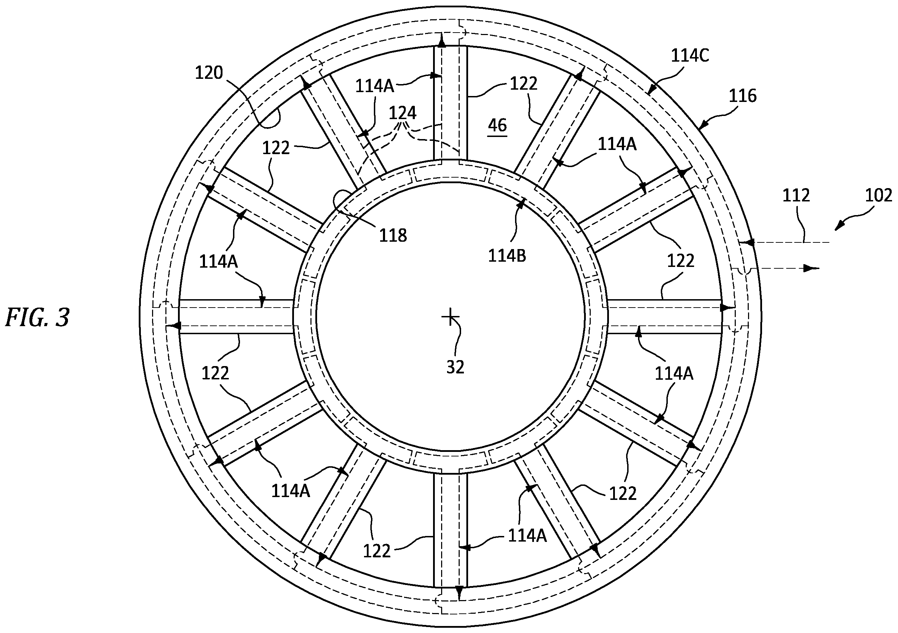

Referring to FIG. 3, the first circuit heat exchangers 114 may be configured with a stator vane structure 116 of the turbine engine 22 (see FIG. 1). This stator vane structure 116 includes a radial inner wall 118 (e.g., an inner platform), a radial outer wall 120 (e.g., an outer platform) and a plurality of stator vanes 122. The inner wall 118 extends axially along and circumferentially about (e.g., completely around) the propulsion system axis 32. This inner wall 118 forms a radial inner peripheral boundary of the longitudinal section of the core flowpath 46 which extends through the stator vane structure 116. The outer wall 120 is disposed radially outboard of the inner wall 118. The outer wall 120 extends axially along and circumferentially about (e.g., completely around) the propulsion system axis 32. This outer wall 120 forms a radial outer peripheral boundary of the longitudinal section of the core flowpath 46. The stator vanes 122 are arranged and may (or may not) be equispaced circumferentially about the propulsion system axis 32 in an array; e.g., an annular array. This array of the stator vanes 122 is disposed radially between the inner wall 118 and the outer wall 120. Each of the stator vanes 122 extends radially across the longitudinal section of the core flowpath 46 from the inner wall 118 to the outer wall 120. Each of the stator vanes 122 may be formed integral with or otherwise connected to the inner wall 118 and the outer wall 120.

One, some or all of the stator vanes 122 may each be configured with a respective one of the vane first circuit heat exchangers 114A. Each vane first circuit heat exchanger 114A, for example, may be configured as an integral part of (or otherwise arranged in thermal communication with) a respective one of the stator vanes 122. More particularly, each vane first circuit heat exchanger 114A may include one or more internal working fluid passages 124. These working fluid passages 124 collectively form a section of the first circuit path 112 through the respective vane first circuit heat exchanger 114A. Each of the working fluid passages 124 is formed by and extends through the respective stator vane 122. With this configuration, heat energy may be conducted through material of that stator vane 122 between the working fluid in the respective working fluid passage 124 and the core air in the longitudinal section of the core flowpath 46. Similarly, the inner wall first circuit heat exchanger 114B may be configured as an integral part of (or otherwise arranged in thermal communication with) the inner wall 118, and the outer wall first circuit heat exchanger 114C may be configured as an integral part of (or otherwise arranged in thermal communication with) the outer wall 120. The present disclosure, however, is not limited to such an exemplary first circuit heat exchanger arrangement. For example, the inner wall first circuit heat exchanger 114B and/or the outer wall first circuit heat exchanger 114C may be omitted. In another example, the inner wall first circuit heat exchanger 114B and/or the vane first circuit heat exchanger(s) 114A may be omitted.

Referring to FIG. 2, the second HX circuit 104 includes a second circuit path 126 and a second circuit heat exchanger 128. The second circuit path 126 extends longitudinally through the second circuit heat exchanger 128 from a second outlet of the first flow regulator 108 to a second inlet into the second flow regulator 110. With this arrangement, the second HX circuit 104 and its second circuit path 126 are coupled in parallel with the first HX circuit 102 and its first circuit path 112 between the first flow regulator 108 and the second flow regulator 110. The second circuit heat exchanger 128 is configured to transfer heat energy between the working fluid flowing in the second circuit path 126 and air received from outside of the engine core 44 (see FIG. 1) and the core flowpath 46.

The second circuit heat exchanger 128 may be configured as a radiator; e.g., an air-oil cooler (AOC). The second circuit heat exchanger 128 of FIG. 2, for example, includes one or more internal air passages 130 and one or more internal working fluid passages 132. Each of these internal passages 130, 132 is formed by the second circuit heat exchanger 128. The air passages 130 collectively form a longitudinal section of an air circuit 134. The working fluid passages 132 collectively form a longitudinal section of the second circuit path 126. The air passages 130 are fluidly discrete from the working fluid passages 132 within the second circuit heat exchanger 128. The air passages 130 and the working fluid passages 132 may be arranged to configure the second circuit heat exchanger 128 as a crossflow heat exchanger, a counterflow heat exchanger, a parallel flow heat exchanger, or a hybrid heat exchanger with a combination crossflow, counterflow and/or parallel flow arrangement.

The air circuit 134 of FIG. 2 extends longitudinally through the second circuit heat exchanger 128 from an airflow inlet 136 into the air circuit 134 to an airflow outlet 138 from the air circuit 134. The circuit inlet 136 fluidly couples the air circuit 134 to an air source 140. The circuit outlet 138 fluidly couples the air circuit 134 to an air sink 142.

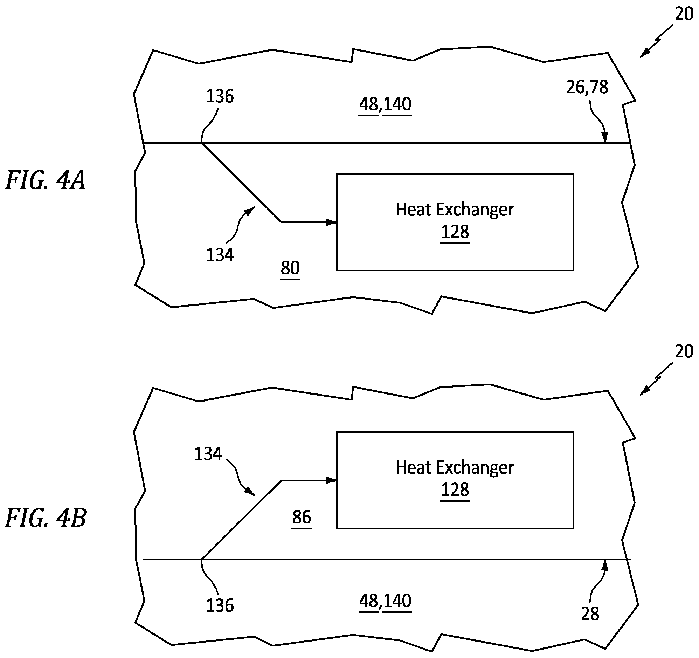

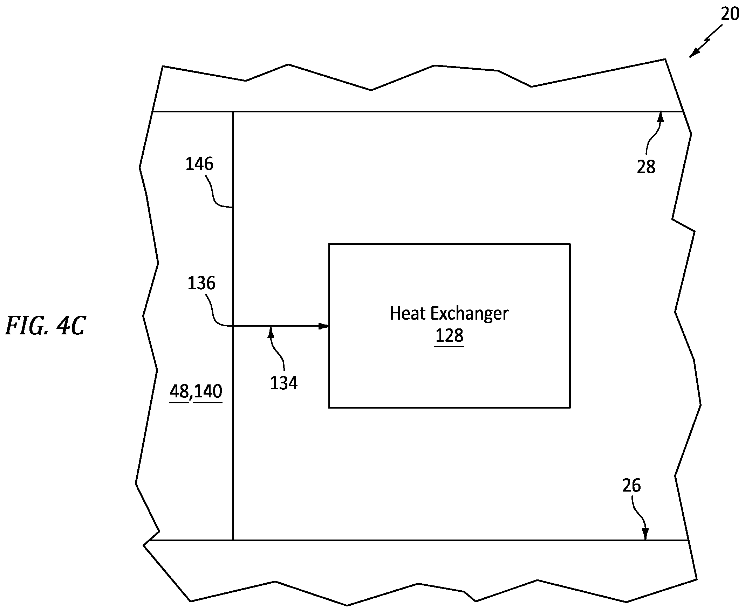

The air source 140 to the air circuit 134 may be the bypass flowpath 48. Here, the circuit inlet 136 may be disposed at various locations longitudinally along the bypass flowpath 48. For example, referring to FIG. 4A, the circuit inlet 136 may be disposed in and/or along the inner peripheral boundary of the bypass flowpath 48; e.g., see location 144A in FIG. 1. In another example, referring to FIG. 4B, the circuit inlet 136 may be disposed in and/or along the outer peripheral boundary of the bypass flowpath 48; e.g., see location 144B in FIG. 1. In still another example, referring to FIG. 4C, the circuit inlet 136 may be arranged with a vane structure 146 (e.g., a bifurcation structure) which extends radially across the bypass flowpath 48 from the inner housing structure 26 to the outer housing structure 28; e.g., see location 144C in FIG. 1. Referring again to FIG. 2, the circuit inlet 136 may be configured as or otherwise include a bleed port (or multiple bleed ports) and/or a scoop (or multiple scoops). The present disclosure, however, is not limited to such exemplary arrangements. For example, it is contemplated the air source 140 may alternatively be another flowpath or pressurized volume outside of the engine core 44 (see FIG. 1). In another example, it is contemplated the air source 140 may be the external environment 88 (see FIG. 1) where, for example, the air received through the circuit inlet 136 is ram air.

The air sink 142 from the air circuit 134 may also be the bypass flowpath 48. The circuit outlet 138, for example, may be configured as or otherwise include an outlet port (or multiple outlet ports) along the bypass flowpath 48, for example downstream of the circuit inlet 136. The present disclosure, however, is not limited to such an exemplary arrangement. For example, the air sink 142 may alternatively be configured as another internal volume within the aircraft propulsion system 20 (e.g., the inner housing compartment 80 of FIG. 1) or the external environment 88. Moreover, while the air sink 142 and the air source 140 are described above as a common element, it is contemplated the air source 140 and the air sink 142 may be discrete elements.

The component circuit 106 includes a component circuit path 148, a component circuit reservoir 150 and a component circuit pump 152. The component circuit path 148 extends longitudinally through the component circuit reservoir 150 and the component circuit pump 152 from an outlet of the second flow regulator 110 to an inlet of the first flow regulator 108. The component circuit path 148 of FIG. 2 is also (a) fluidly coupled to and may extend through and/or (b) may be otherwise arranged in thermal communication with the propulsion system component 100. In the arrangement of FIG. 2, the component circuit reservoir 150, the component circuit pump 152 and the propulsion system component 100 are serially arranged longitudinally along the component circuit path 148 from the second flow regulator 110 to the first flow regulator 108. The present disclosure, however, is not limited to such an exemplary arrangement. For example, it is contemplated the propulsion system component 100 may alternatively be arranged upstream of the component circuit pump 152 and/or the component circuit reservoir 150 along the component circuit path 148 Moreover, it is contemplated the component circuit 106 may (or may not) also include one or more additional fluid circuit components arranged along the component circuit path 148 such as, but not limited to, filter(s), sensor(s), additional heat exchanger(s), additional powerplant component(s), valve(s), pump(s), etc.

The component circuit reservoir 150 is configured to contain a quantity of the working fluid before, during and/or after working fluid system operation. The component circuit reservoir 150, for example, may be configured as or otherwise include a tank, a cylinder, a pressure vessel, a bladder or any other type of (e.g., liquid) storage container.

The component circuit pump 152 is configured to direct and/or regulate a flow of the working fluid longitudinally through the component circuit path 148 and the first circuit path 112 and/or the second circuit path 126 as described below in further detail.

The first flow regulator 108 is configured to regulate the flow of the working fluid from the component circuit 106 and its component circuit path 148 into (a) the first HX circuit 102 and its first circuit path 112 and/or (b) the second HX circuit 104 and its second circuit path 126. For example, during a first mode of operation, the first flow regulator 108 may fluidly couple the component circuit path 148 to the first circuit path 112. The first flow regulator 108 may thereby direct the flow of the working fluid from the component circuit path 148 into the first circuit path 112. During this first operating mode, the first flow regulator 108 may also fluidly decouple the component circuit path 148 from the second circuit path 126 such that the flow of the working fluid from the component circuit path 148 into the second circuit path 126 is cutoff or otherwise stopped. During a second mode of operation, the first flow regulator 108 may fluidly couple the component circuit path 148 to the second circuit path 126. The first flow regulator 108 may thereby direct the flow of the working fluid from the component circuit path 148 into the second circuit path 126. During this second operating mode, the first flow regulator 108 may also fluidly decouple the component circuit path 148 from the first circuit path 112 such that the flow of the working fluid from the component circuit path 148 into the first circuit path 112 is cutoff or otherwise stopped. It is also contemplated the first flow regulator 108 may (or may not) also operate during a third mode of operation. During this third operating mode, the first flow regulator 108 may fluidly couple the component circuit path 148 to the first circuit path 112 and the second circuit path 126 in parallel such that the flow of the working fluid from the component circuit path 148 is split into both the first circuit path 112 and the second circuit path 126, for example during a transition between the first operating mode and the second operating mode. The first flow regulator 108 may be configured as or otherwise include a control valve (or a valve system), a flow diverter or the like.

The second flow regulator 110 is configured to regulate the flow of the working fluid from (a) the first HX circuit 102 and its first circuit path 112 and/or (b) the second HX circuit 104 and its second circuit path 126 into the component circuit 106 and its component circuit path 148. For example, during the first operating mode, the second flow regulator 110 may fluidly couple the first circuit path 112 to the component circuit path 148. The second flow regulator 110 may thereby direct the flow of the working fluid from the first circuit path 112 into the component circuit path 148. During this first operating mode, the second flow regulator 110 may also fluidly decouple the second circuit path 126 from the component circuit path 148. During the second operating mode, the second flow regulator 110 may fluidly couple the second circuit path 126 to the component circuit path 148. The second flow regulator 110 may thereby direct the flow of the working fluid from the second circuit path 126 into the component circuit path 148. During this second operating mode, the second flow regulator 110 may also fluidly decouple the first circuit path 112 from the component circuit path 148. It is also contemplated the second flow regulator 110 may (or may not) also operate during the third operating mode. During this third operating mode, the second flow regulator 110 may fluidly couple the first circuit path 112 and the second circuit path 126 to the component circuit path 148. Of course, in other embodiments, it is contemplated this second flow regulator 110 or the first flow regulator 108 may be omitted, where the remaining flow regulator 108 or 110 may control the working fluid flow within the working fluid system 98. The second flow regulator 110 may be configured as or otherwise include a control valve (or a valve system), a flow diverter or the like.

During aircraft propulsion system operation, the propulsion system component 100 may generate heat energy. To regulate an operating temperature of (e.g., cool) the propulsion system component 100, the working fluid system 98 may facilitate heat transfer between the propulsion system component 100 and the working fluid along the component circuit 106. Here, the heat energy generated by the propulsion system component 100 may be transferred into the working fluid in the component circuit path 148. This heat energy transfer cools the propulsion system component 100 while heating the working fluid. To reject the heat energy from the heated working fluid, the working fluid system 98 may be operated in the first operating mode, the second operating mode or the third operating mode (when applicable).

When there is relatively little airflow through the bypass flowpath 48 (see FIG. 1) such as during low power operation of the turbine engine 22 and its engine core 44 (e.g., during ground idle), the working fluid system 98 may operate in the first operating mode. During this first operating mode, the flow of the working fluid is directed (e.g., at least or only) through the first HX circuit 102 and its first circuit heat exchangers 114. These first circuit heat exchangers 114 transfer the heat energy from the heated working fluid into the core air (upstream of the LPC rotor 59 of FIG. 1). The heat energy transfer cools the working fluid for re-circulation back to the component circuit 106, while heating the core air. Under certain conditions, referring to FIG. 1, some of the core air may also be bled from the core flowpath 46 via a bleed 155 (e.g., between the LPC rotor 59 and the HPC rotor 60) and dumped into the bypass flowpath 48. During such a bleed operation, at least some of the heat energy previously transferred into the core air through the first circuit heat exchangers 114 may be removed from the engine core 44. The working fluid system 98 of FIG. 2 may thereby utilize the high pressure core air (compared to the bypass air) during the low power operation without significantly altering engine core operating temperatures, etc. Moreover, during the low power operation, the engine core operating temperatures are typically lower than during higher power operation. The turbine engine 22 and its engine core 44 may thereby accommodate (e.g., slight) increases in core air during its low power operation.

When there is relatively high airflow through the bypass flowpath 48 (see FIG. 1) such as during intermediate power operation or high power operation of the turbine engine 22 and its engine core 44 (e.g., during aircraft takeoff, aircraft climb, aircraft cruise, etc.), the working fluid system 98 may operate in the second operating mode. During this second operating mode, the flow of the working fluid is directed (e.g., at least or only) through the second HX circuit 104 and its second circuit heat exchanger 128. This second circuit heat exchanger 128 transfers the heat energy from the heated working fluid into the bled bypass air. The heat energy transfer cools the working fluid for re-circulation back to the component circuit 106, while heating the bled bypass air for reintroduction into the bypass flowpath 48; e.g., for thrust recapture. During this second operating mode, little or no heat energy may be transferred into the core air from the first circuit heat exchangers 114. The engine core 44 may thereby operate at or close to its design efficiency.

When operation is transitioning from the first operating mode to the second operating mode (or vice versa), the working fluid system 98 may operate in the third operating mode. During this third operating mode, the flow of the working fluid is directed through the first HX circuit 102 and its first circuit heat exchangers 114 as well as the second HX circuit 104 and its second circuit heat exchanger 128. Here, the heat energy from the heated working fluid may be transferred into both the core air and the bleed bypass air. While the third operating mode is described above to facilitate the transition between the first operating mode and the second operating mode, it is contemplated the third operating mode may also or alternatively be utilized for an extended period of time. In select other embodiments, it is contemplated the third operating mode may be omitted; e.g., where the flow regulators 108 and 110 are two way valves switching from one circuit path to the other circuit path.

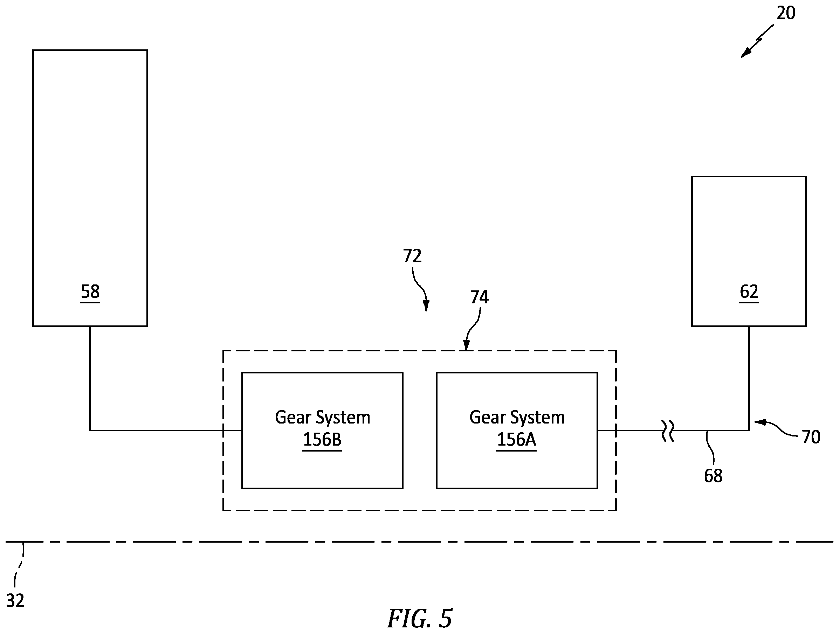

In some embodiments, the propulsion system component 100 may be configured as the geartrain 74. Referring to FIG. 5, the geartrain 74 may be configured with one or more internal gear systems 156A and 156B (generally referred to as "156") to provide, for example, a relatively large speed change (e.g., speed reduction) between the low speed rotating structure 70 and the propulsor rotor 58. The gear systems 156A and 156B of FIG. 5 are operatively coupled in series between the low speed rotating structure 70 and the propulsor rotor 58. More particularly, the first gear system 156A operatively couples the low speed rotating structure 70 to the second gear system 156B. The second gear system 156B operatively couples the first gear system 156A, and therethrough the low speed rotating structure 70, to the propulsor rotor 58. Each of these gear systems 156 may be configured as an epicyclic gear system. For example, each gear system 156 may be configured as or otherwise include a planetary gear system; e.g., an epicyclic gear system with a fixed ring gear. In another example, each gear system 156 may be configured as or otherwise include a star gear system; e.g., an epicyclic gear system with a fixed carrier. In still another example, one of the gear systems 156A, 156B may be configured as or otherwise include a planetary gear system, and the other one of the gear systems 156B, 156A may be configured as or otherwise include a star gear system. The present disclosure, however, is not limited to such exemplary gear systems. Moreover, while the geartrain 74 may include the multiple gear systems 156 to provide the larger speed reduction, it is contemplated the geartrain 74 may alternatively include a single gear system (e.g., a single planetary gear system or a single star gear system) operatively coupling the low speed rotating structure 70 to the propulsor rotor 58 in other embodiments.

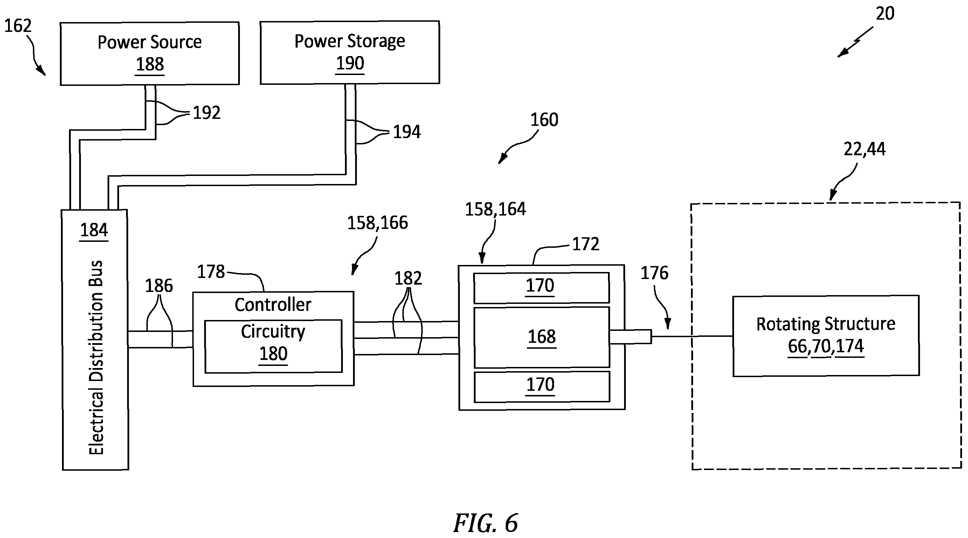

In some embodiments, referring to FIG. 2, the propulsion system component 100 may be configured as a component 158 of an electric machine system 160 (see FIG. 6) for the aircraft propulsion system 20. Referring to FIG. 6, the electric machine system 160 is electrically coupled to an electrical system 162 for the aircraft and its aircraft propulsion system 20. The electric machine system 160 of FIG. 6 includes at least (or only) one electric machine 164 and at least (or only) one electric machine (EM) controller 166 (e.g., an electronic controller) for the electric machine 164. For ease of description, the electric machine 164 of FIG. 6 is described below as being electrically coupled to, controlled by and/or otherwise associated with the single, dedicated EM controller 166. However, it is contemplated a single EM controller may alternatively be electrically coupled to, may control and/or may otherwise be associated with multiple electric machines. It is also contemplated multiple EM controllers may be electrically coupled to, may control and/or may otherwise be associated with the single electric machine. Here, the propulsion system component 100 (see FIG. 2) may be configured as the electric machine 164 or the EM controller 166. Alternatively, the working fluid system 98 (see FIG. 2) may service both the electric machine 164 and the EM controller 166.

The electric machine 164 of FIG. 6 includes an electric machine rotor 168, an electric machine stator 170 and an electric machine housing 172; e.g., a case. The machine rotor 168 is rotatable about a rotational axis of the machine rotor 168. The machine stator 170 of FIG. 6 is radially outboard of and circumscribes the machine rotor 168. With this arrangement, the electric machine 164 is configured as a radial flux electric machine. The electric machine 164 of the present disclosure, however, is not limited to such an exemplary rotor-stator configuration nor to radial flux arrangements. The machine rotor 168, for example, may alternatively be radially outboard of and circumscribe the machine stator 170. In another example, the machine rotor 168 may be axially next to the machine stator 170 configuring the electric machine 164 as an axial flux electric machine. Referring again to FIG. 6, the machine rotor 168 and the machine stator 170 are at least partially or completely housed within an interior of the machine housing 172.

The electric machine 164 may be operatively coupled to an engine rotating structure 174; e.g., the high speed rotating structure 66 or the low speed rotating structure 70 of FIG. 1. The machine rotor 168 of FIG. 6, for example, is mechanically coupled to and rotatable with the engine rotating structure 174 through an engine-electric machine drivetrain 176. This engine-electric machine drivetrain 176 may be configured as or otherwise include a shaft, a tower shaft assembly, an accessory gearbox, an angle gearbox, and/or the like. For ease of description, the machine rotor 168 of FIG. 6 is described below as being coupled to and rotatable with a unique one of the engine rotating structure 174 of the turbine engine 22. However, it is contemplated the machine rotor 168 may alternatively be coupled to and rotatable with multiple engine rotating structures (e.g., the low speed rotating structure 70 and the high speed rotating structure 66 of FIG. 1), directly or through another device such as a differential or a clutch system. In addition, while the electric machine 164 is described above as being coupled to the engine rotating structure 174, it is contemplated the machine rotor 168 may also or alternatively be operatively coupled to another rotating device through the engine-electric machine drivetrain 176 such as, but not limited to, a pump rotor, an auxiliary compressor rotor, an actuator rotor, or the like.

The electric machine 164 of FIG. 6 may be configurable as an electric motor and/or an electric generator; e.g., an electric motor-generator. For example, during a motor mode of operation, the electric machine 164 may operate as the electric motor to convert electricity received from the aircraft electrical system 162 into mechanical power. The machine stator 170, for example, may generate an electromagnetic field with the machine rotor 168 using a current of electricity received from the aircraft electrical system 162 through the respective EM controller 166. This electromagnetic field may drive rotation of the machine rotor 168. The machine rotor 168, in turn, may provide mechanical power to and drive rotation of the engine rotating structure 174 through the engine-electric machine drivetrain 176. This mechanical power may be provided to boost power or completely power the rotation of the engine rotating structure 174. By contrast, during a generator mode of operation, the electric machine 164 may operate as the electric generator to convert mechanical power received from the engine rotating structure 174 into electricity. Rotation of the machine rotor 168, for example, may be rotationally driven by rotation of the engine rotating structure 174 through the engine-electric machine drivetrain 176. The rotation of the machine rotor 168 may generate an electromagnetic field with the machine stator 170, and the machine stator 170 may convert energy from the electromagnetic field into electricity. The electric machine 164 may then provide a current of electricity to the aircraft electrical system 162 through the EM controller 166 for storage and/or further use. The electric machine 164 of the present disclosure, however, is not limited to such exemplary operation. For example, the electric machine 164 may alternatively be configured as a dedicated electric generator; e.g., without the electric motor functionality. In another example, the electric machine 164 may alternatively be configured as a dedicated electric motor; e.g., without the electric generator functionality.

The EM controller 166 includes a controller housing 178 and internal controller circuitry 180. The controller housing 178 may be configured as an enclosed case (e.g., a closed or sealed container) for the controller circuitry 180. The controller circuitry 180 is disposed within an interior of the controller housing 178; e.g., an internal chamber or other volume(s) within and enclosed by the controller housing 178. The controller circuitry 180 includes various electrical components, connectors and the like. Examples of the electrical components include, but are not limited to, printed circuit board(s) (PCB(s)), electrical inductor(s), electrical inverter(s), electrical amplifier(s), electrical switch(es) (e.g., contactor(s), relay(s), etc.), processing device(s), memory module(s), communication module(s), electrical transformer(s), electrical rectifier(s), and/or the like.

The EM controller 166 is electrically coupled to the electric machine 164 through one or more electrical couplings 182. More particularly, the controller circuitry 180 of the EM controller 166 is electrically coupled to the electric machine 164 and its machine stator 170 through the electrical couplings 182. Similarly, the EM controller 166 is electrically coupled to an electrical distribution bus 184 of the aircraft electrical system 162 through one or more electrical couplings 186. More particularly, the controller circuitry 180 of the EM controller 166 is electrically coupled to the aircraft electrical system 162 and its electrical distribution bus 184 through the electrical couplings 186. Examples of the electrical couplings 182, 186 include, but are not limited to, high voltage electric cables, power feeder cables, power buses, and/or the like.

The EM controller 166 and its controller circuitry 180 are configured to control operation of the electric machine 164. For example, when operating as the electric motor, the EM controller 166 and its controller circuitry 180 are configured to regulate a flow of electricity from the aircraft electrical system 162 to the electric machine 164. This electricity flow regulation may include: (a) turning-on the flow of electricity from the aircraft electrical system 162 to the electric machine 164 (e.g., electrically coupling the electric machine 164 to the aircraft electrical system 162); (b) turning-off the flow of electricity from the aircraft electrical system 162 to the electric machine 164 (e.g., electrically decoupling the electric machine 164 from the aircraft electrical system 162); (c) moderating the flow of electricity from the aircraft electrical system 162 to the electric machine 164. Here, each EM controller 166 operates as a motor controller. In another example, when operating as the electric generator, each EM controller 166 and its controller circuitry 180 are configured to regulate a flow of electricity from the electric machine 164 to the aircraft electrical system 162. This electricity flow regulation may include: (a) turning-on the flow of electricity from the electric machine 164 to the aircraft electrical system 162 (e.g., electrically coupling the electric machine 164 to the aircraft electrical system 162); (b) turning-off the flow of electricity from the electric machine 164 to the aircraft electrical system 162 (e.g., electrically decoupling the electric machine 164 from the aircraft electrical system 162); (c) moderating the flow of electricity from the electric machine 164 to the aircraft electrical system 162. Here, the EM controller 166 operates as a generator controller.

The aircraft electrical system 162 includes the electrical distribution bus 184. This aircraft electrical system 162 may also include a power source 188 and/or a power storage 190. The electrical distribution bus 184 is electrically coupled to the electric machine 164 through the respective EM controller 166. The electrical distribution bus 184 is also electrically coupled to the power source 188 and the power storage 190 through one or more respective electrical couplings 192 and 194; e.g., high voltage electric cables, power feeder cables, power buses, and/or the like. With this arrangement, the electrical distribution bus 184 provides an intermediate connection between the various electrical members 164 (via 166), 188 and/or 190. Moreover, it is contemplated the electrical distribution bus 184 may (or may not) also be electrically coupled to and provide the intermediate connection with one or more additional electric devices of the aircraft propulsion system 20 and/or one or more additional electric devices of the aircraft outside of the aircraft propulsion system 20. Examples of the additional electric devices of the aircraft propulsion system 20 include, but are not limited to, sensors, actuators, pumps, valves, an electronic engine controller for the turbine engine 22, and/or the like. Examples of the additional electric devices of the aircraft outside of the aircraft propulsion system 20 include, but are not limited to, electric devices mounted with an airframe of the aircraft.

The power source 188 is configured to generate electricity and provide that electricity to the electrical distribution bus 184. The power source 188, for example, may be configured as an electric generator powered by the turbine engine 22 (see FIG. 1). In another example, the power source 188 may be configured as an electric generator powered by another aircraft powerplant; e.g., an engine of a companion aircraft propulsion system, an engine of an auxiliary power unit (APU), a fuel cell system, and/or the like.

The power storage 190 is configured to receive electricity from the electrical distribution bus 184 and store that received electricity as potential energy. The power storage 190 is also configured to release the stored potential energy as electricity output into the electrical distribution bus 184. The power storage 190, for example, may be configured as or otherwise include a battery or an array of batteries (e.g., a battery pack). In another example, the power storage 190 may be configured as or otherwise include one or more capacitors; e.g., supercapacitors.

While the working fluid system 98 is described above as servicing propulsion system component(s) 100 such as the geartrain 74, the electric machine 164 and/or the EM controller 166, the present disclosure is not limited thereto. The working fluid system 98, for example, may also or alternatively service one or more other propulsion system components 100 such as: engine bearing(s) supporting the low speed rotating structure 70 (see FIG. 1), engine bearing(s) supporting the high speed rotating structure 66 (see FIG. 1), engine bearing(s) supporting the propulsor rotor 58 (see FIG. 1), lubricated seal member(s), and/or the like.

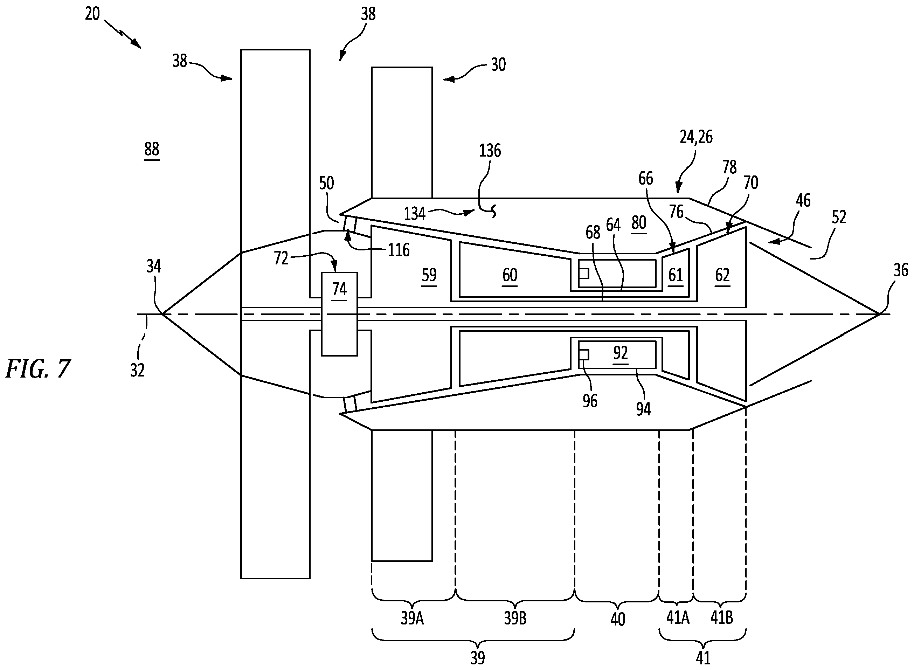

The aircraft propulsion system 20 shown in FIG. 1 is described above with the outer housing structure 28 housing the propulsor rotor 58 and the guide vane structure 30. In other embodiments, referring to FIG. 7, the outer housing structure may be omitted to expose the propulsor rotor 58 and the guide vane structure 30 to the external environment 88. This aircraft propulsion system 20 of FIG. 7 is configured as an open rotor propulsion system. The propulsor rotor 58 is configured as an open propulsor rotor. The guide vane structure 30 is configured as an open guide vane structure. The working fluid system 98 of FIG. 2 may be particularly suited for servicing component(s) of the aircraft propulsion system 20 of FIG. 7 since the open propulsion section 38 of FIG. 7 may have a lower pressure ratio thereacross than the ducted propulsion section 38 of FIG. 1.

While the turbine engine 22 is shown in FIGS. 1 and 7 with a particular two rotating structure arrangement (e.g., a two-spool architecture), the present disclosure is not limited thereto. For example, the LPC rotor 59 may be omitted to configure the LPT rotor 62 as a power turbine (PT) rotor for the propulsor rotor 58. The turbine engine 22 may also or alternatively include another rotating structure with a bladed compressor rotor in the compressor section 39 and a bladed turbine rotor in the turbine section 41; e.g., an intermediate speed spool for the engine core 44.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An assembly for an aircraft propulsion system (20), comprising:
an engine core (44) including a compressor section (39), a combustor section (40) and a turbine section (41);
an engine flowpath (46) extending longitudinally through the compressor section (39), the combustor section (40) and the turbine section (41) from an airflow inlet (50) into the engine flowpath (46) to a combustion products exhaust (52) from the engine flowpath (46); and
a working fluid system (98) comprising a first fluid circuit (102) and a second fluid circuit (104),
wherein the working fluid system (98) is configured to direct a working fluid through the first fluid circuit (102) during a first mode, and the first fluid circuit (102) comprises a first circuit heat exchanger (114A) configured to transfer heat energy between the working fluid and air flowing within the engine flowpath (46) upstream of the combustor section (40), and
wherein the working fluid system (98) is configured to direct the working fluid through the second fluid circuit (104) during a second mode, and the second fluid circuit (104) comprising a second circuit heat exchanger (128) configured to transfer heat energy between the working fluid and air flowing outside of the engine flowpath (46).

2. The assembly of claim 1, wherein:
the working fluid system (98) is configured to stop flow of the working fluid through the first fluid circuit (102) during the second mode; and/or
the working fluid system (98) is configured to stop flow of the working fluid through the second fluid circuit (104) during the first mode.

3. The assembly of claim 1 or 2, wherein the working fluid system (98) is configured to direct the working fluid through the first fluid circuit (102) and the second fluid circuit (104) during a third mode.

4. The assembly of claim 1, 2 or 3, wherein at least one of:
the first mode is selected during low power operation of the engine core (44); or
the second mode is selected during intermediate power operation and/or high power operation of the engine core (44).

5. The assembly of any preceding claim, wherein the first circuit heat exchanger (114) is disposed along the engine flowpath between the compressor section (39) and the airflow inlet (50).

6. The assembly of any preceding claim, further comprising:
a vane structure including an inner wall (118), an outer wall (120) and a plurality of vanes (122);
the inner wall (118) forming an inner peripheral boundary of the engine flowpath (46) longitudinally through the vane structure;
the outer wall (120) forming an outer peripheral boundary of the engine flowpath (46) longitudinally through the vane structure;
the plurality of vanes (122) arranged circumferentially about an axis (32) in an array, each of the plurality of vanes (122) extending radially across the engine flowpath (46) from the inner wall (118) to the outer wall (120), and the plurality of vanes (122) comprising a first vane; and
the first circuit heat exchanger (114A) configured with the first vane.

7. The assembly of claim 6, wherein:
the first fluid circuit (102) further comprises a second first circuit heat exchanger (114A) configured to transfer heat energy between the working fluid and the air flowing within the engine flowpath (46) upstream of the combustor section (40) and the plurality of vanes (122) comprise a second vane (122), and the second-first circuit heat exchanger (114A) is configured with the second vane (122); and/or
the first fluid circuit (102) further comprises a second or third first circuit heat exchanger (114B; 114C) configured to transfer heat energy between the working fluid and the air flowing within the engine flowpath (46) upstream of the combustor section (40), and the second or third first circuit heat exchanger (114B; 114C) is configured with the inner wall (118) or the outer wall (120).

8. The assembly of any preceding claim, further comprising a flowpath wall (118; 120) forming a peripheral boundary of a longitudinal section of the engine flowpath, and the first circuit heat exchanger (114B; 114C) is configured with the flowpath wall (118;120).

9. The assembly of any preceding claim, wherein:
the assembly further comprises a bypass flowpath (48) disposed outside of the engine core (44), wherein the air flowing outside of the engine core (44) is bled from the bypass flowpath (48); and/or
the working fluid comprises lubricant.

10. The assembly of any preceding claim, further comprising:
a propulsion system component (74; 100; 158);
the working fluid system (98) configured to service the propulsion system component (74; 100; 158) using the working fluid during the first mode and the second mode.

11. The assembly of claim 10, further comprising:
a propulsor rotor (58);
a rotating structure (66; 70; 174) configured to drive rotation of the propulsor rotor (58), the rotating structure comprising a compressor rotor (59; 60) in the compressor section (39) and a turbine rotor (61; 62) in the turbine section (41); and
a geartrain (74) operatively coupling the rotating structure to the propulsor rotor (58), wherein the propulsion system component comprises the geartrain (74) ,
wherein, optionally, the geartrain (74) comprises a plurality of epicyclic gear systems (156A; 156B) serially coupled between the rotating structure and the propulsor rotor (58).

12. The assembly of claim 10, further comprising:
a rotating structure (66; 70; 174) comprising a compressor rotor (59; 60) in the compressor section (39) and a turbine rotor (61; 62) in the turbine section (41); and
an electric machine system (160) operatively coupled to the rotating structure, the electric machine system (160) comprising the propulsion system component (158).

13. The assembly of any preceding claim, further comprising:
a propulsion section (38) comprising a ducted propulsor rotor (58), wherein the engine core (44) is configured to power operation of the propulsion section (38); or
a propulsion section (38) comprising an open propulsor rotor, wherein the engine core (44) is configured to power operation of the propulsion section (38).

14. An assembly for an aircraft propulsion system (20), comprising:
a propulsion section (38) comprising a propulsor rotor (58);
an engine core (44) configured to power operation of the propulsion section (38), the engine core (44) including a compressor section (39), a combustor section (40) and a turbine section (41);
a rotating structure comprising a compressor rotor (59; 60) in the compressor section (39) and a turbine rotor (61; 62) in the turbine section (41);
a geartrain (74) comprising a plurality of epicyclic gear systems (156A; 156B) serially coupled between the rotating structure and the propulsor rotor (58);
an engine flowpath (46) extending longitudinally through the compressor section (39), the combustor section (40) and the turbine section (41) from an airflow inlet (50) into the engine flowpath to a combustion products exhaust (52) from the engine flowpath; and
a working fluid system (98) configured to cool and/or lubricate the geartrain (74) using a working fluid, the working fluid system (98) comprising a heat exchanger (114) configured to transfer heat energy between the working fluid and air flowing within the engine flowpath.

15. An assembly for an aircraft propulsion system (20), comprising:
a propulsion section (38) comprising an open propulsor rotor (58);
an engine core (44) configured to power operation of the propulsion section (38), the engine core (44) including a compressor section (39), a combustor section (40) and a turbine section (41);
an engine flowpath (46) extending longitudinally through the compressor section (39), the combustor section (40) and the turbine section (41) from an airflow inlet (50) into the engine flowpath to a combustion products exhaust (52) from the engine flowpath; and
a working fluid system (98) configured to cool and/or lubricate a component (74; 100; 158) of the aircraft propulsion system (20) using a working fluid, the working fluid system (98) comprising a heat exchanger (114) configured to transfer heat energy between the working fluid and air flowing within the engine flowpath.
